Europäisches Patentamt

European Patent Office

Office européen des brevets

(11) Numéro de publication: **0 351 476**

**A1**

(12) **DEMANDE DE BREVET EUROPEEN**

(21) Numéro de dépôt: 88401910.0

(22) Date de dépôt: 22.07.88

(51) Int. Cl.⁴: **A23G 9/22 , A23G 9/20**

(43) Date de publication de la demande:
24.01.90 Bulletin 90/04

(84) Etats contractants désignés:
AT BE CH DE ES GB GR IT LI LU NL SE

(71) Demandeur: GOAVEC S.A. SOCIETE DITE :
13, Rue Eiffel
Alencon (Orne)(FR)

(72) Inventeur: Goavec, Jean-Jacques
La Vallée Claire
Alencon (Orne)(FR)

(74) Mandataire: Cabinet Pierre HERRBURGER
115, Boulevard Haussmann
F-75008 Paris(FR)

(54) Installation pour la fabrication de produits alimentaires, notamment de produits alimentaires foisonnés, tels que des crèmes glacées.

(57)    Installation pour la fabrication de produits alimentaires, notamment de produits alimentaires foisonnés tels que des crèmes glacées, comprenant un organe de congélation (B) pour refroidir et homogénéiser le produit avant de la conduite à des organes de conditionnement, cet organe de congélation se composant d'une chambre cylindrique formant une double enveloppe à l'intérieur de laquelle circule un fluide frigorigène et des moyens d'agitation montés à rotation à l'intérieur du cylindre,

Installation caractérisée en ce que les moyens d'agitation de la chambre cylindrique sont constitués par une vis d'Archimède (25,30B) pourvue sur sa périphérie de couteaux racleurs (32B) orientés dans le sens de la longueur de la vis et s'appliquant sur la surface interne (28B) de la chambre cylindrique à double enveloppe.

L'invention s'applique aux installations pour la fabrication de produits alimentaires foisonnés.

FIG.1

FIG.6

## Installation pour la fabrication de produits alimentaires, notamment de produits alimentaires foisonnés, tels que des crèmes glacées.

L'invention concerne une installation pour la fabrication de produits alimentaires, notamment de produits alimentaires foisonnés, tels que des crèmes glacées.

L'invention concerne en particulier une installation pour la fabrication de produits alimentaires, notamment de produits alimentaires foisonnés tels que des crèmes glacées, comprenant un organe de congélation pour refroidir et homogénéiser le produit avant de la conduire à des organes de conditionnement, cet organe de congélation se composant d'une chambre cylindrique formant une double enveloppe à l'intérieur de laquelle circule un fluide frigorigène et des moyens d'agitation montés à rotation à l'intérieur du cylindre.

On connaît déjà des installations de ce genre, qui comprennent une enceinte cylindrique réfrigérée à double paroi, à l'intérieur de laquelle sont disposés des agitateurs afin de brasser le produit qui est introduit dans l'enceinte, au cours de son refroidissement.

Il est cependant apparu que la nature de cette agitation est très importante pour la rapidité de la congélation pour l'homogénéité du produit congelé, ainsi que pour la structure de ce produit dont les dimensions des particules du produit congelé, qui déterminent la qualité essentielle du produit, varient grandement en fonction de l'agitation qui est réalisée en cours de congélation.

Il est ainsi connu de mettre en oeuvre des agitateurs ou des batteurs, constitués par des tiges et des couteaux racleurs longitudinaux (voir le brevet américain N° 2 132 364) ou par des batteurs hélicoïdaux (voir les brevets américains N° 4 275 567 et 2 713 253) mais ces dispositifs connus ne permettent pas d'obtenir avec un degré suffisant les qualités ci-dessus indiquées pour les produits congelés et, notamment, les particules congelées sont de dimensions relativement grandes, le temps de congélation est important et l'homogénéité est défectueuse, sauf si bien entendu on accepte d'améliorer cette homogénéité en augmentant la durée de malaxage en réduisant également le débit.

L'invention se propose de perfectionner l'art antérieur et concerne à cet effet une installation caractérisée en ce que les moyens d'agitation de la chambre cylindrique sont constitués par une vis d'Archimède pourvue sur sa périphérie de couteaux racleurs orientés dans le sens de la longueur de la vis et s'appliquant sur la surface interne de la chambre cylindrique à double enveloppe.

D'autres caractéristiques de l'invention font l'objet des autres revendications.

L'invention sera décrite de manière plus détaillée à l'aide des dessins annexés dans lesquels :

- la figure 1 est un schéma de principe de l'installation,
- la figure 2 est un schéma montrant les différentes boucles de régulation de l'installation de la figure 1,
- la figure 3 est une coupe axiale de la moitié de la vis d'Archimède,
- la figure 4 est une coupe transversale partielle schématique de la vis d'Archimède,
- la figure 5 est une vue de la vis d'Archimède selon un premier mode de réalisation du présent perfectionnement,
- la figure 6 est une vue de la vis d'Archimède selon un second mode de réalisation du présent perfectionnement,
- la figure 7 est une vue schématique de l'organe de congélation muni du moyen de renvoi de produit selon une autre caractéristique du présent perfectionnement,
- les figures 8 et 9 représentent schématiquement deux modes de réalisation de l'organe de foisonnement.

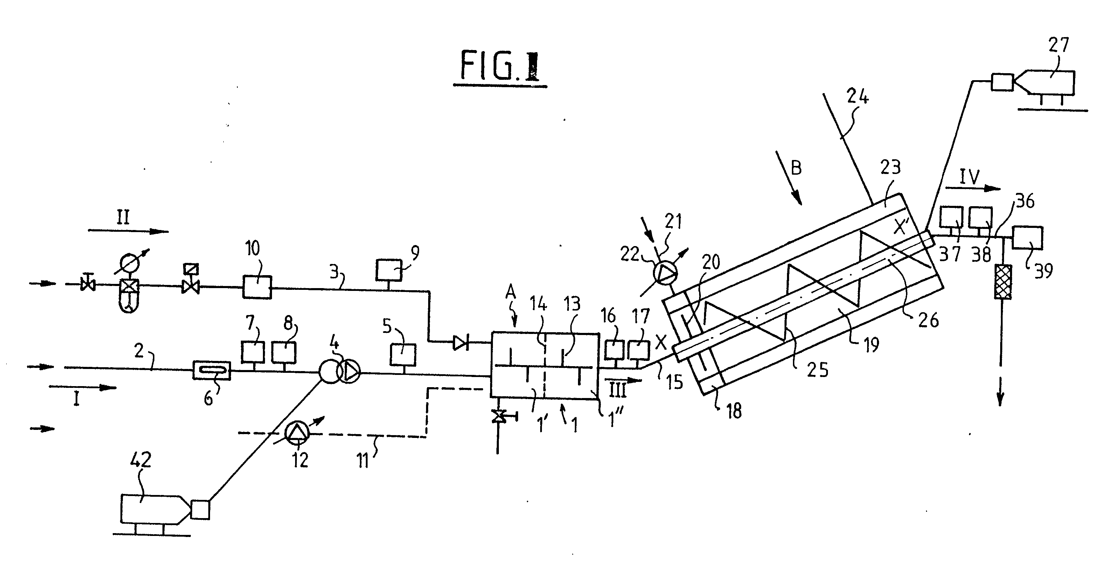

Selon la figure 1, l'installation objet de l'invention comporte, principalement, des organes de foisonnement A et des organes de congélation B.

Les organes de foisonnement A sont constitués par une enceinte fermée 1 dans laquelle aboutissent une conduite 2 d'alimentation de mélange initial (flèche I) ainsi qu'une conduite 3 d'alimentation en gaz, notamment d'air de foisonnement (flèche II).

Le mélange introduit dans l'enceinte 1 par la conduite d'alimentation 2 est constitué par de l'eau, du lait, du sucre, du parfum etc.. ; il est aspiré par une pompe volumétrique 4 suivant un débit constamment détecté par un capteur de débit 5. Des capteurs de température 7 et de pression 8 détectent à tout moment les caractéristiques de ce mélange. Un vi seur 6 permet de surveiller le mélange initial s'écoulant dans la conduite d'alimentation 2.

La pression du gaz de conduite 3 est détectée par un capteur 9 tandis qu'un doseur, injecteur de gaz, ou débitmètre massique 10, décrit ultérieurement, permet d'intervenir à tout moment sur la quantité de gaz délivré.

Une conduite d'alimentation secondaire 11 fournit un liquide annexe, plus ou moins visqueux (colorant, pulpe de fruits...) dont le débit est réglé par une pompe doseuse 12.

L'enceinte 1 comportant essentiellement une enveloppe réfrigérante non représentée, est munie d'un système d'agitation à organes mobiles 13 pour mélanger de façon homogène les différents constituants arrivant par les conduites 2, 3 et 11.

L'enceinte 1 peut être séparée en deux compartiments 1′ et 1″ par une grille finement perforée 14 favorisant le mélange des différents constituants.

Après un très bref temps de séjour, le mélange foisonné et homogénéisé sortant des organes de foisonnement A selon la flèche III est propulsé vers les organes de congélation B par la pompe volumétrique 4 au travers d'une canalisation 15 aussi courte que possible, équipée des capteurs de température 16 et de pression 17.

Les organes de foisonnement A peuvent être raccordés directement aux organes de congélation B.

Selon la figure 1, les organes de congélation comportent, en allant de l'amont vers l'aval dans le sens de circulation III du mélange, une chambre auxiliaire 18 ainsi qu'une chambre de refroidissement 19. Les chambres sont cylindriques et coaxiales.

La chambre auxiliaire 18, non refroidie, est munie d'un système d'agitation axiale à palettes 20 ; elle reçoit une conduite 21 d'alimentation en particules solides reliée à une trémie doseuse 22.

Le système d'agitation 20 maintient en suspension les particules solides introduites dans le mélange par la canalisation 21 sans risquer de les détériorer ; il est, à cet effet, essentiel que l'agitation ne soit pas trop intensive.

La chambre de refroidissement 19 est munie d'une double enveloppe 23 reliée à un circuit 24 de circulation d'un fluide frigorigène pour permettre une congélation partielle sous forme de petits cristaux, d'une partie de l'eau contenue dans le mélange, à une température suffisamment basse pour que le produit sortant selon la flèche IV des organes de congélation B ait une texture suffisamment stable et se trouve à une température suffisamment basse pour être directement conditionné et stocké en chambre froide.

La partie interne de la chambre de refroidissement 19 renferme une vis d'Archimède 25 mobile en rotation autour d'un arbre 26 coïncidant avec l'axe x-x′ et entrainé par un moteur à vitesse variable 27, pour assurer le transport des produits.

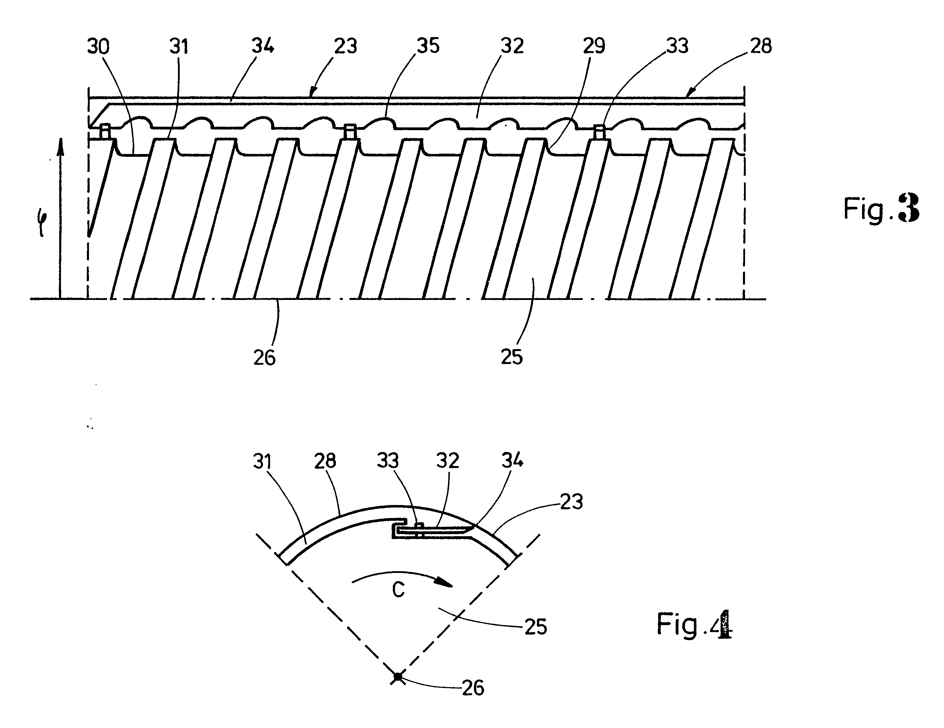

La configuration de la vis d'Archimède 25 est représentée plus en détail sur les figures 3 et 4 sur lesquelles seule la paroi interne 28 de la double enveloppe 23 a été représentée.

Pour faciliter la compréhension , la distance libre entre la superficie externe 29 de la vis 25 et la paroi interne 28 de la double enveloppe 23, a été exagérée ; dans la réalité, la vis est ajustée à quelques dixièmes ou quelques millimètres de jeu près à l'intérieur du cylindre échangeur.

Selon la figure 3, les gorges 30 creusées entre les filets 31 sont relativement peu profondes par rapport au diamètre de la vis 25 et ont subi un traitement préalable de sablage pour que la surface externe 29 de la vis ne soit pas lisse mais granitée afin qu'il se forme, sur celle-ci, un film d'eau qui évite que les matières grasses du mélange se séparent et forment du beurre.

Des couteaux racleurs longitudinaux 32 articulés sur les filets 31, notamment par l'intermédiaire de plots 33, grattent par leur extrémité externe affûtée 34, la surface interne 28 du cylindre 23.

Selon la figure 3, compte tenu de l'articulation des couteaux, lorsque la vis 25 tourne selon la flèche C, ceux-ci se trouvent plaqués contre la paroi 28 sous l'effet de la force centrifuge ce qui assure un raclage optimal.

Des encoches 35 profilées, prévues sur la face interne des couteaux racleurs 32, empêchent tout "bourrage" de produit entre ceux-ci et les gorges 30 du filet et parfont l'homogénéisation et le foisonnement du produit.

Selon la figure 1, les organes de congélation B sont légèrement inclinés par rapport à l'horizontale ; ils pourraient également être horizontaux sans pour cela sortir du cadre de l'invention ; le mélange congelé sortant tangentiellement de ces organes selon la flèche IV est transmis par une canalisation de sortie 36 munie des capteurs de température, de pression et de viscosité 37, 38 et 39, à des moyens de conditionnement et de stockage.

L'installation décrite ci-dessus est régulée par un système d'asservissement dont l'organe principal est un calculateur central 40.

En début de processus de fabrication, le calculateur 40 reçoit des valeurs de consigne concernant, par exemple, la quantité de gaz, notamment d'air de foisonnement, à introduire par la conduite d'ali mentation 3 dans l'enceinte 1 pour un débit donné de produits dans la conduite d'alimentation 2, la quantité d'additifs à ajouter par les conduites 11 ou 21, le débit du produit final sortant par la canalisation 36, la température et la viscosité de celui-ci, ou encore la pression d'alimentation sur les éléments de conditionnement.

A partir de ces valeurs de consigne, et des grandeurs fournies par les capteurs déjà décrits, on établit plusieurs boucles de régulation. La plus importante de ces boucles concerne la régulation du foisonnement ; à cet effet, le capteur de débit 5 monté sur la conduite d'alimentation 2 en aval de la pompe volumétrique 4, transmet son information au calculateur central 40 (signal a) ; en réponse, celui-ci fournit un signal de commande (signal b) au débitmètre massique 10 de la conduite d'alimentation 3 en gaz de foisonnement, notamment en air, pour ajuster la quantité de gaz introduite au niveau des organes de foisonnement A à une valeur prédéterminée ; à partir de l'information a transmise par le capteur de débit 5, le calculateur central 40 commande également (signaux c et d) la quantité d'additifs à introduire dans les canalisations 11 et 21, ainsi que, (signaux e et i), les vitesses de rotation du moteur 27 de commande de l'arbre 26 de la vis 25 et du moteur 42 de commande de la pompe volumétrique 4 pour que le débit de produit à la sortie des organes de congélation B dans la conduite 36 corresponde au débit prédéterminé.

Une autre boucle de régulation est dérivée des valeurs de température et de viscosité (signaux f et g) transmises au calculateur 40 par les capteurs 37 et 39 de la conduite 36. En réponse, le calculateur 40 transmet un signal de commande h à une vanne d'aspiration 41 du circuit frigorifique 24 pour commander les caractéristiques du produit final.

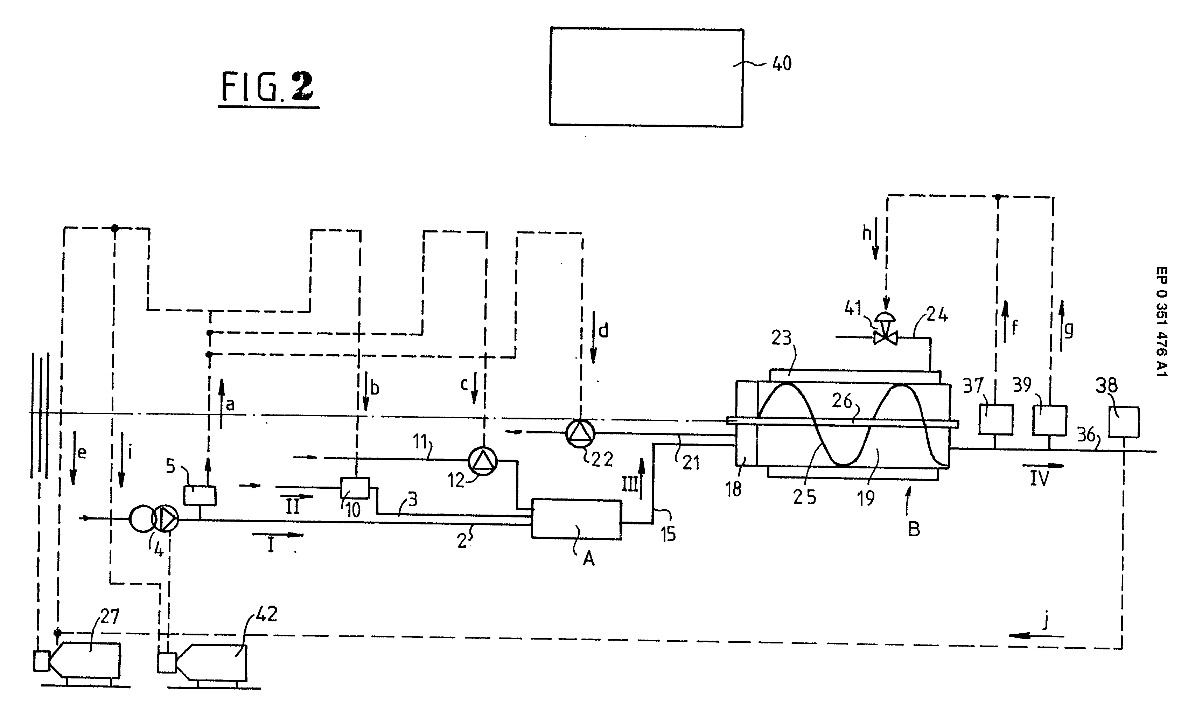

Une dernière boucle de régulation représentée sur la figure 2 correspond à une information transmise au calculateur 40 par le capteur de pression 38. En réponse, celui-ci fournit un signal de commande j au moteur 27. La réponse peut en être une modification de pression de sortie sur le poste de conditionnement, sans pour autant altérer le débit de sortie qui est alors régulé par l'ordre donné par le calculateur 40 selon la flèche i, agissant sur le moteur 42 de la pompe 4.

Il convient également d'insister sur le fait que la description ci-dessus ne doit être considérée que comme un exemple de réalisation de l'invention et que celle-ci pourrait avec des modifications mineures s'appliquer à des installations de type quelque peut différent, notamment dans lesquelles le foisonnement du produit final est très faible - voir nul - ou dans lesquelles le système de refroidissement est remplacé par un système de réchauffement (par modification de la double enveloppe dans laquelle circule le fluide thermique) ou encore à des installations pour le traitement de produits très visqueux (sauce, confitures ...) pouvant contenir des particules solides et fragiles (champignons en morceaux...).

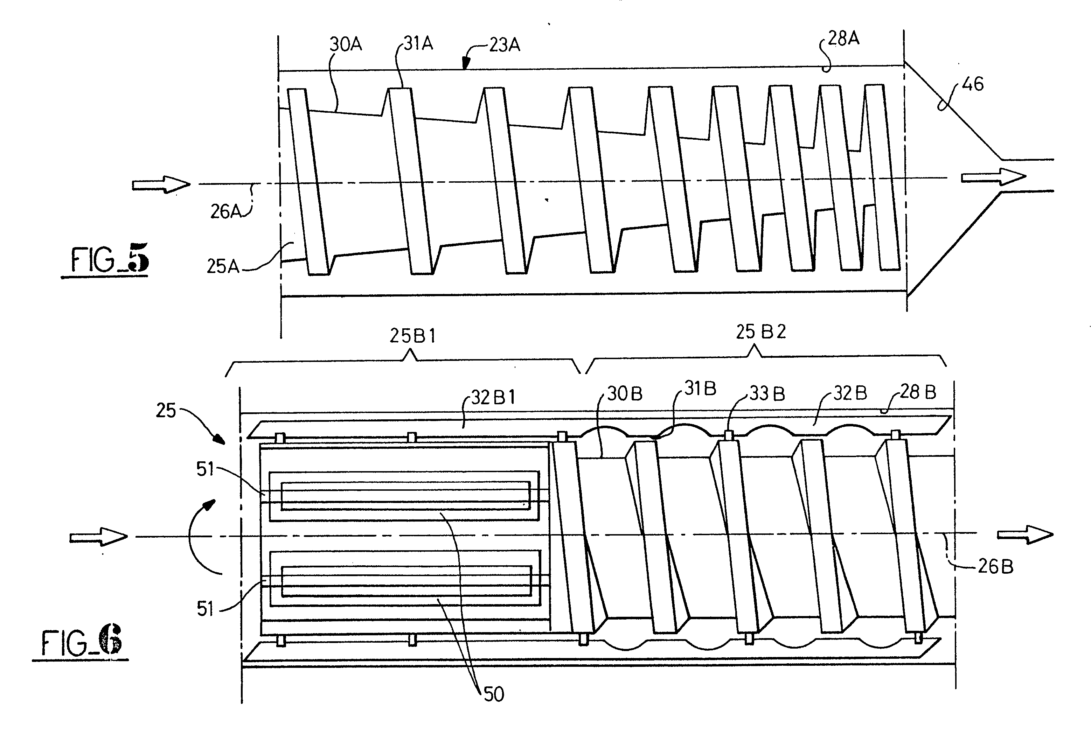

Selon la figure 5, l'installation comporte une vis d'Archimède 25A tournant autour d'un axe 26A. Cette vis a un filet 31A dont la profondeur 30A augmente dans le sens d'avancement du produit schématisé par la flèche à gauche de la figure, c'est-à-dire en allant de la gauche vers la droite. Selon un mode de réalisation préférentiel, la profondeur du filet augmente corrélativement à la diminution du pas, de manière à conserver une section constante pour le volume transporté, et cela, sur toute la longueur de la vis. Afin de diminuer les forces de frottement et d'accompagner le cheminement du produit lors de sa sortie des organes de congélation, la paroi 46 de la sortie de la vis est réalisée en forme conique.

Cette figure montre également la paroi interne 28A de l'organe de congélation ainsi que la double enveloppe 23A qui définit cette paroi du cylindre formant l'organe de congélation. Cette figure ne montre pas les couteaux placés entre la vis 25A et la paroi interne 28A comma cela a déjà été décrit dans le brevet principal.

La figure 6 montre un autre mode de réalisation d'une vis 25B. Cette vis se compose de deux parties 25B1 et 25B2. La partie 25B1 est située en amont et la partie 25B2 en aval dans le sens de la circulation des produits matérialisé par les flèches.

La partie 25B2 comporte un filet 31B délimitant des cavités 30B. Un couteau racleur longitudinal 32B est fixé au filet par l'intermédiaire des plots 33B.

La partie amont 25B1 de la vis se compose d'organes mobiles, centraux, 50 constitués par des palettes montées en rotation sur des axes 51. Ces palettes peuvent tourner librement autour de leur axe.

Les palettes ne constituent qu'un exemple de réalisation et toute autre forme d'organe de brassage pourrait être envisagée.

Cette figure montre également de manière schématique la paroi intérieure 28B du cylindre de l'organe de congélation, paroi qui est représentée schématiquement à une certaine distance de l'arête du couteau. D'ailleurs, le couteau 32 B se prolonge au niveau des palettes 50 par une partie de couteau 32B1 ne comportant pas les encoches de débourrage comme dans la partie 25B2 de la vis.

La figure 7 montre une autre variante de réalisation de l'invention. Cette variante concerne l'organe de congélation qui n'est pas représenté en détail, ainsi que les différents accessoires portant les références du brevet principal. Cette variante se caractérise par l'embranchement 43 en sortie de la chambre 19 pour revenir en retour à l'entrée 44 de cette chambre par l'intermédiaire d'une conduite de retour 45. Cela permet de prélever en sortie une partie des produits congelés pour réinjecter les paillettes ou produits déjà congelés dans le produit à l'entrée de la chambre 19 et ensemencer ce produit par les petits cristaux du produit déjà congelé. Cela accélère le processus de congélation et favorise la division plus fine du produit congelé. Il est à remarquer que l'entrée 44 peut se situer soit sur le conduit d'alimentation 15, soit déboucher directement dans la chambre 19.

Selon cette même variante, le produit final foisonné et congelé est repris par une pompe volumétrique 47, mise en rotation par son moteur à vitesse variable 48, assurant le transport du produit vers les organes de congélation au débit voulu. Cette pompe est située en aval de l'embranchement de recirculation dans le sens de passage du produit.

Une autre version est également possible, où une vanne de contre-pression remplace en lieu et place la pompe de sortie 47. Cette vanne de contre-pression n'est pas représentée sur la figure 7.

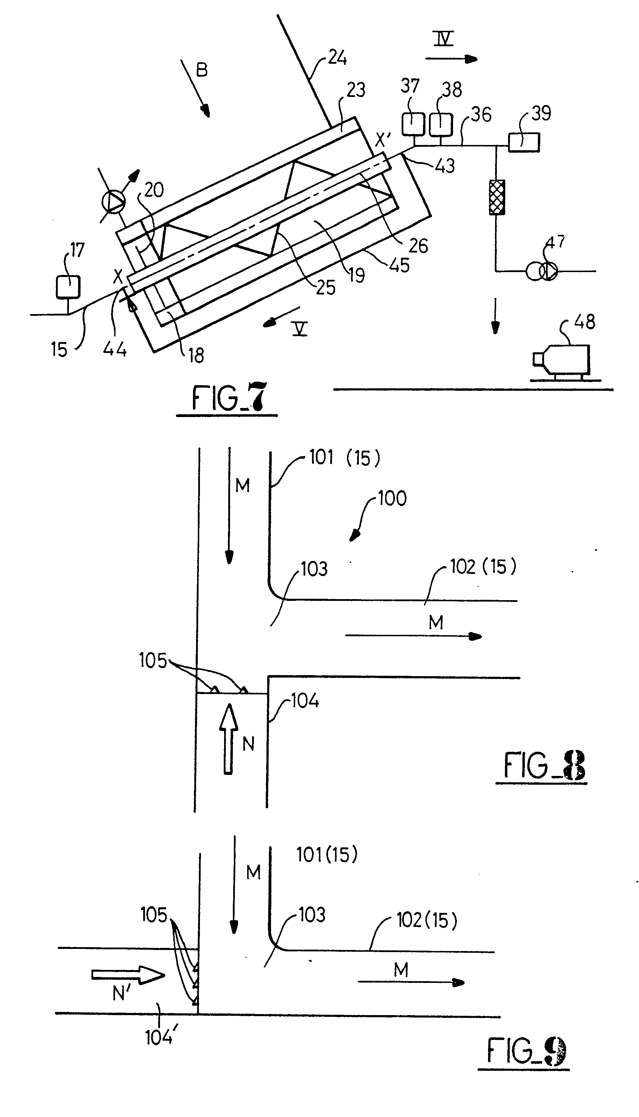

La figure 8 montre une première variante de l'organe de foisonnement 100 constitué par la partie 101 de la conduite 15 d'alimentation en produit à congeler et de la partie 102 de cette même conduite 15. Les parties 101, 102 sont reliées par un coude 103 au niveau duquel débouche une conduite 104 avec des injecteurs d'air ou de gaz de foisonnement 105. La circulation du produit à congeler est représentée par les flèches M. La circulation du gaz de foisonnement (air) est représentée par la flèche N. Dans le cas de la figure 4, l'injection de l'air par les injecteurs 15 se fait en sens opposé de la circulation des produits dans la partie 101 et au niveau du coude 103.

Par contre, dans la variante représentée à la figure 9, qui, pour les conduites 101, 102 et les coudes 103 correspond à la variante de la figure 4, la différence réside dans la disposition de la conduite 104' qui est alignée sur la conduite de sortie 102 et non sur la conduite d'entrée 101. Dans ce cas également, l'air qui circule dans la direction de la flèche N' est injecté par des injecteurs 105'. L'injection se fait alors dans le même sens et la même direction que la flèche M et non à contre-courant.

Bien que l'invention ait été décrite ci-dessus dans le cas d'une fabrication de produits avec congélation, il est tout aussi possible de faire circuler dans les organes de congélation un fluide caloporteur qui jouent alors le rôle d'organe de réchauffement, toutes les fonctions et caractéristiques de l'invention restant identiques ou semblables. Le fluide caloporteur peut, par exemple, être de l'eau chaude ou de la vapeur.

**Revendications**

1°) Installation pour la fabrication de produits alimentaires, notamment de produits alimentaires foisonnés tels que des crèmes glacées, comprenant un organe de congélation (B) pour refroidir et homogénéiser le produit avant de la conduite à des organes de conditionnement, cet organe de congélation se composant d'une chambre cylindrique formant une double enveloppe à l'intérieur de laquelle circule un fluide frigorigène et des moyens d'agitation montés à rotation à l'intérieur du cylindre, installation caractérisée en ce que les moyens d'agitation de la chambre cylindrique sont constitués par une vis d'Archimède (25) pourvue sur sa périphérie de couteaux racleurs (32) orientés dans le sens de la longueur de la vis et s'appliquant sur la surface interne de la chambre cylindrique à double enveloppe.

2°) Installation conforme à la revendication 1, caractérisée en ce que les couteaux racleurs (32) sont montés articulés à la périphérie de la vis (25).

3°) Installation conforme à la revendication 1, caractérisée en ce que la surface de la vis (25) est granitée.

4°) Installation conforme aux revendications 1 ou 2, caractérisée en ce que les couteaux (32) sont orientés suivant des génératrices de la vis (25).

5°) Installation conforme à l'une quelconque des revendications précédentes, caractérisée en ce que les couteaux racleurs (32) présentent des encoches (35) sur leur bord interne au niveau de la gorge de la vis (25).

6°) Installation conforme à la revendication 1, caractérisée en ce que la chambre cylindrique à double paroi présente, en amont dans le sens de circulation du produit, une chambre auxiliaire cylindrique (18) munie d'un agitateur (13) d'axe coaxial à l'arbre de la vis d'Archimède.

7°) Installation conforme à l'une quelconque des revendications précédentes, caractérisée en ce que la chambre cylindrique à double paroi est inclinée, l'extrémité amont, dans le sens de circulation du produit, étant la plus basse.

8°) Installation conforme à l'une quelconque des revendications précédentes, caractérisée en ce que l'organe de congélation (B) est alimenté par un produit foisonné issu d'un organe de foisonnement (A) lui-même alimenté par le produit non foisonné et par un gaz de foisonnement, cet organe de foisonnement se composant d'une enceinte fermée (1) dans laquelle un agitateur (13) est entraîné en rotation.

9°) Installation conforme à la revendication 8, caractérisée en ce que l'enceinte (1) de l'organe de foisonnement (A) est divisée en deux compartiments par une grille finement perforée (14).

10°) Installation conforme à l'une quelconque des revendications précédentes, caractérisée en ce qu'elle comporte un système d'asservissement comprenant un capteur de débit (5) monté sur une conduite (2) d'alimentation en produit alimentaire non foisonné en aval d'une pompe volumétrique (4), ce capteur de débit (5) étant relié à un calculateur (40) pour lui fournir des informations en réponse auxquelles ce calculateur commande un doseur-injecteur de gaz ou débitmètre massique (10) prévu dans une conduite (3) d'alimentation en gaz de foisonnement, afin d'ajuster la quantité de ce gaz à une valeur prédéterminée correspondant à un pourcentage prédéterminé de foisonnement du produit obtenu à la sortie des organes de congélation (B).

11°) Installation conforme à la revendication 10, caractérisée en ce que la vis d'Archimède (25) et la pompe volumétrique (4) sont entraînées par des moteurs à vitesse variable, la rotation de ces moteurs étant commandée à partir du calculateur central (40) en fonction des informations qui lui sont transmises par le capteur de débit, de façon à ajuster à une valeur de consigne le débit de produit foisonné, notamment de crème glacée, obtenu à la sortie des organes de congélation (B).

12°) Installation conforme aux revendications 10 et 11, caractérisée en ce que le système d'asservissement comporte des capteurs de température de pression et de viscosité (7, 8, 9, 16, 17, 37, 38, 39) prévus, d'une part, au niveau des conduites d'alimentation (2, 3) en mélange initial et en gaz, et d'autre part, à la sortie des organes de foisonnement (A) et de congélation (B), ces capteurs étant reliés au calculateur central (40) pour corriger l'asservissement de la texture du produit (température, viscosité), de la quantité de gaz, notamment d'air de foisonnement introduite au niveau des organes de foisonnement (A) de la pression de sortie dans la canalisation (36) et celui du débit final obtenu à la sortie des organes de congélation (B), et pour ajuster les caractéristiques de ce produit à des valeurs prédéterminées.

13°) Installation conforme à l'une quelconque des revendications de 10 à 12, caractérisée en ce qu'il est prévu une conduite d'alimentation (11) en additifs liquides visqueux ou solides au niveau des organes de foisonnement (A), ces additifs étant aspirés par une pompe doseuse (12) ou déversés par une pompe doseuse (12) reliée au calculateur central (40).

14°) Installation selon la revendication 1, caractérisée en ce que la vis d'Archimède (25A) possè de un filet (31A) dont la profondeur (30A) augmente dans le sens d'avancement du produit.

15°) Installation selon la revendication 14, caractérisée en ce que la profondeur (30A) du filet augmente corrélativement à la diminution du pas de la vis d'Archimède, de façon que le volume transporté reste constant sur toute la longueur de la vis d'Archimède (25A).

16°) Installation selon les revendications 14 et 15, caractérisée en ce que la sortie de la vis d'Archimède est de forme conique (46), dans le sens de passage du produit.

17°) Installation selon la revendication 1, caractérisée en ce qu'en amont de la partie (25B) munie du filet, la vis d'Archimède comporte une partie pourvue de couteaux longitudinaux et d'organes mobiles centraux.

18°) Installation selon la revendication 17, caractérisée en ce que les organes mobiles longitudinaux sont des palettes.

19°) Installation selon la revendication 1, caractérisée par un embranchement (43) sur la sortie de l'organe de congélation (B), embranchement (43) relié en retour (45) à l'entrée (44) de cet organe de congélation (B) pour ensemencer le produit à traiter dans cet organe de congélation par des parties du produit déjà congelées.

20°) Installation selon la revendication 19, caractérisée en ce que l'embranchement (43, 45) est relié au conduit d'alimentation (15) de l'organe de congélation (B).

21°) Installation selon la revendication 19, caractérisée en ce que l'embranchement (43, 45) est relié à l'extrémité amont de la chambre cylindrique.

22°) Installation selon la revendication 19, caractérisée en ce que le produit en aval de l'embranchement de recirculation est repris par une pompe de sortie (47) et son moteur (48).

23°) Installation selon la revendication 21, caractérisée en ce que la pompe de sortie est remplacée par une vanne de contre-pression en lieu et place.

24°) Installation selon les revendications 1 et 8, caractérisée en ce que l'organe de foisonnement est constitué par une partie de la conduite (15, 100, 101, 102) munie d'une buse (105) d'injection d'air à micro-perforations.

25°) Installation selon la revendication 24, caractérisée en ce que la buse (105) d'injection d'air est située au coude de la conduite (15, 100, 101, 102) et travaille dans le sens du courant du produit (104) ou à contre-courant du produit (104).

# FIG. 1

EP 0 351 476 A1

# FIG.2

Fig.3

Fig.4

EP 0 351 476 A1

FIG_5

FIG_6

FIG_7

FIG_8

FIG_9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 936 161 (T.N. CUMMINGS et al.) | | A 23 G 9/22 |
| | * Figures 2,3,5-7; colonne 3, ligne 33 - colonne 4, ligne 50 * | 1,2 | A 23 G 9/20 |
| Y | | 4-6 | |
| | -- | | |
| Y | US-A-2 867 994 (A.H. WAKEMAN) | | |
| | * Figures 2-4,7; colonne 4, ligne 57 - colonne 5, ligne 28 * | 1,2,4-6 | |
| | -- | | |
| X | GB-A-2 181 068 (R.D. HOWELL et al.) | | |
| | * En entier * | 10,11 | |
| Y | | 12 | |
| | -- | | |
| Y | EP-A-0 229 237 (LUMEN) | | |
| | * Figure 1; revendications 1-4 * | 12 | DOMAINES TECHNIQUES RECHERCHES (Int. Cl.4) |
| | -- | | A 23 G |
| X,Y | US-A-2 197 919 (J. WARREN BOWMAN) | | |
| | * Page 2, lignes 49-61; figures 1, 2 * | 8,9 | |
| | -- | | |
| Y | FR-A- 951 680 (P.F. BEICH) | | |
| | * Figures 1,4; page 2, ligne 60 - page 3, ligne 36 * | 8,9 | |
| | -- | | |
| E | FR-A-2 616 043 (J.J. GOAVEC) (dépôt 03-06-1987; publ. 09-12-1988) | | |
| | * En entier * | 1-25 | |
| | -- | | |
| | ./. | | |

Le présent rapport de recherche a été établi pour toutes les revendications

| Lieu de la recherche | Date d'achèvement de la recherche | Examinateur |
|---|---|---|
| LA HAYE | 20-10-1989 | GUYON |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C- 538 202 (C. WEDEKIND VOGT et al.)<br><br>* Figures 1-4; page 2, lignes 84-105; page 3, lignes 65-76 *<br><br>-- | 1,2,4,<br>7,14,15 | |
| A | US-A-3 380 716 (R.L. ARTER)<br><br>* Colonne 3, lignes 13-17; figures 1,2 *<br><br>-- | 1 | |
| A | FR-A-1 183 900 (CLARKE-BUILT)<br><br>* En entier *<br><br>-- | 1,5 | |
| A | DERWENT FILE SUPPLIER WPI(L), AN 85-208410, 1985, Derwent Publ., Londres, GB<br>& SU-A-1 136 781 (V.D. TROPP et al.)<br><br>* Abrégé *<br><br>-- | 4 | DOMAINES TECHNIQUES RECHERCHES (Int. Cl.4) |
| A | US-A-4 104 412 (H.A. FISCHER et al.)<br><br>* Figures 1,2,6; revendication 1 *<br><br>-- | 8,9 | |
| A | DE-A-2 153 959 (C. ZOPPELLARI) | | |
| A | US-A-3 719 056 (W.L. HOCK et al.) | | |
| A | US-A-3 061 281 (L.A.M. PHELAN et al) | | |
| A | US-A-2 836 401 (L.A.M. PHELAN) | | |
| A | US-A-2 309 424 (C.E. WEINREICH et al.) | | |

Le présent rapport de recherche a été établi pour toutes les revendications ./.

| Lieu de la recherche | Date d'achevement de la recherche | Examinateur |
|---|---|---|
| | | |

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| A | US-A-2 506 101 (H.M. OLTZ) | | |
| A | US-A-4 433 559 (J.R. SPINNER) | | |
| A | US-A-2 959 932 (P. SPERGEL et al.) | | |
| | ---------- | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| | | |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 92